(19) Europäisches Patentamt
European Patent Office
Office européen des brevets

(11) **EP 2 031 436 A1**

(12) **EUROPEAN PATENT APPLICATION**
published in accordance with Art. 153(4) EPC

(43) Date of publication:
**04.03.2009 Bulletin 2009/10**

(51) Int Cl.:
***G02F 1/03*** *(2006.01)*

(21) Application number: **07744962.7**

(22) Date of filing: **08.06.2007**

(86) International application number:
**PCT/JP2007/061646**

(87) International publication number:
**WO 2007/145144 (21.12.2007 Gazette 2007/51)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **14.06.2006 JP 2006164609**
**06.12.2006 JP 2006329766**

(71) Applicant: **Anritsu Corporation**
**Atsugi-shi**
**Kanagawa 243-8555 (JP)**

(72) Inventors:
• **KAWANO, Kenji**
**c/o Anritsu Corporation**
**Kanagawa 243-8555 (JP)**
• **NANAMI, Masaya**
**c/o Anritsu Corporation**
**Kanagawa 243-8555 (JP)**
• **SATO, Yuji**
**c/o Anritsu Corporation**
**Kanagawa 243-8555 (JP)**

• **UCHIDA, Seiji**
**c/o Anritsu Corporation**
**Kanagawa 243-8555 (JP)**
• **IGARASHI, Nobuhiro**
**c/o Anritsu Corporation**
**Kanagawa 243-8555 (JP)**
• **NAKAHIRA, Toru**
**c/o Anritsu Corporation**
**Kanagawa 243-8555 (JP)**
• **KAWAZURA, Eiji**
**c/o Anritsu Corporation**
**Kanagawa 243-8555 (JP)**
• **MATSUMOTO, Satoshi**
**c/o Anritsu Corporation**
**Kanagawa 243-8555 (JP)**

(74) Representative: **Pautex Schneider, Nicole Véronique et al**
**Novagraaf International SA**
**25, avenue du Pailly**
**1220 Les Avanchets - Geneva (CH)**

(54) **OPTICAL MODULATOR**

(57)    Herein disclosed is an optical modulator, comprising: an optical waveguide (3); and a traveling wave electrode (4) including an interaction portion (9) for modulating a phase of incident light and an input feed-through portion (7), in which the optical modulator further comprises at least one impedance transformation portion for reducing an impedance mismatching between a characteristic impedance of the interaction portion and at least one of characteristic impedances of the input feed-through portion, a connector electrically connected to the input feed-through portion, and an external circuit, at least one of the impedance transformation portions has a characteristic impedance which is different from a geometric mean of the characteristic impedances of said interaction portion and said input feed-through portion, a geometric mean of the characteristic impedances of the interaction portion and the connector, or a geometric mean of the characteristic impedances of the interaction portion and the external circuit.

FIG. 1

**Description**

BACKGROUND OF THE INVENTION

1. Field of the Invention

The present invention relates to an optical modulator with low drive voltage and high modulation speed.

2. Prior Art

Up until now, there has been developed an optical modulator such as a traveling wave electrode type of lithium niobate optical modulator (hereinafter simply referred to as an LN optical modulator) comprising a substrate (hereinafter simply referred to as an LN substrate) made of a material such as lithium niobate ($LiNbO_3$) having an electro-optic effect to cause a refractive index of an incident light to be varied in response to an electric field applied to the substrate, thereby making it possible to form an optical waveguide and a traveling wave electrode in and on the substrate. The LN optical modulator can be applied to a large volume optical transmission system having a capacity in the range of 2.5 Gbit/s to 10 Gbit/s due to the excellent chirping characteristics. In recent years, the LN optical modulator thus constructed is under review to be applied to the optical transmission system having a super large capacity of 40 Gbit/s and therefore expected as a key device in this technological field.

(First Prior Art)

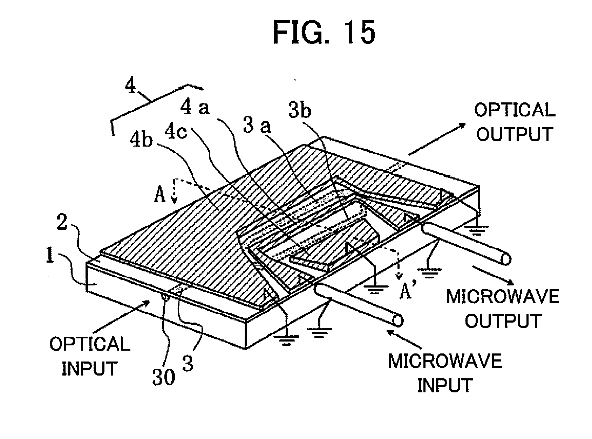

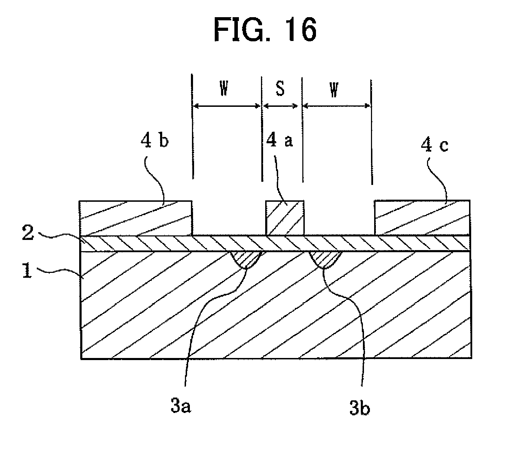

There are two types of LN optical modulators with respect to the states of the substrate, one substrate having a z-cut state, and the other having an x-cut state (or a y-cut state). Here, x-cut LN substrate type LN optical modulator will be described as the first prior art, wherein the LN optical modulator comprises an x-cut LN substrate and a coplanar waveguide (CPW) forming a traveling wave electrode. FIG. **15** is a perspective view showing the x-cut substrate type LN optical modulator. FIG. **16** is a cross-sectional view taken along the line A-A' of FIG. **15.** Incidentally, the discussion hereinafter can be applied to the LN optical modulator using the z-cut state substrate.

In FIGS. **15** and **16,** the reference numeral **1** represents an x-cut LN substrate, the reference numeral **2** represents an $SiO_2$ buffer layer having a thickness in the range of approximately 200 nm to 1 $\mu$ m and being transparent to incident light having wavelength typically utilized for optical communications such as for example 1.3 or 1.55 $\mu$ m, the reference numeral **3** represents an optical waveguide forming a Mach-Zehnder interferometer (a Mach-Zehnder optical waveguide), the optical waveguide **3** being formed with a process of evaporating a metal Ti (titanium) on the x-cut LN substrate **1,** and a process of thermal diffusing for 10 hours at 1050 °C. The optical waveguide **3** includes two interaction optical waveguides, that is, two arms **3a ,3b** at the position (the position will be referred to as an interaction portion) where an electric signal and an incident light which is entered into the optical waveguide **3** through a light entering facet **30** interact with each other. The CPW traveling wave electrode **4** is constituted by a center electrode **4a** and ground electrodes **4b, 4c.** In FIG. **16, S** represents the width of the center electrode **4a,** which is in the range of approximately 6 $\mu$m to 20 $\mu$m, generally about 10 $\mu$m while **W** represents the width of a gap (or a CPW gap) between the center electrode **4a** and the ground electrodes **4b, 4c.**

In this first prior art, both a bias voltage (generally a DC bias voltage) and a high frequency electric signal (a microwave or an RF electric signal) are superimposed and applied between the center electrode **4a** and the ground electrodes **4b, 4c.** The $SiO_2$ buffer layer **2** is important in that it functions to expand a modulation bandwidth of the optical modulator by reducing an equivalent refractive index $n_m$ (a microwave equivalent refractive index $n_m$) of the high frequency electric signal to be close to an equivalent refractive index $n_0$ of the incident lights traveling through the respective interaction optical waveguides **3a, 3b.**

The operation of the LN optical modulator thus constructed will be described hereinafter. Firstly, the DC bias voltage and the high frequency electric signal are necessary to be applied between the center electrode 4a and the ground electrodes **4b, 4c** to realize the operation of the LN optical modulator.

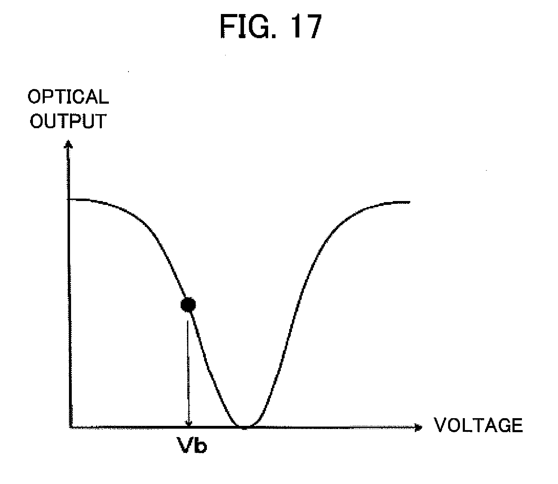

FIG. **17** is a graph showing the relationship between the applied voltage and the output light power of the LN optical modulator under a certain condition with the DC bias voltage set at "Vb". As shown in FIG. **17,** the DC bias voltage "Vb" is generally set such that the output light power becomes middle value of the peak-to-peak value.

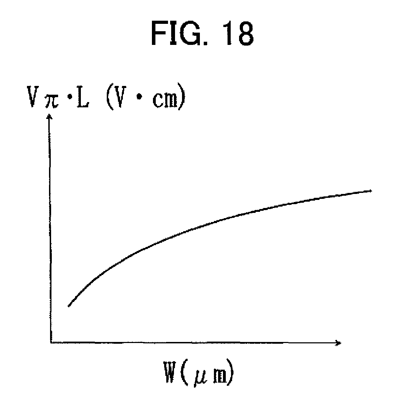

FIG. **18** is a graph showing the relationship between the mathematical product $V\pi \cdot L$ of a half-wave voltage $V\pi$ and the length L of the interaction portion, and the width of the CPW gap W. The width of the CPW gap W is presently in the range of approximately 20 $\mu$m to 30 $\mu$m. In the case the width of the CPW gap W is narrow, the high frequency electric field strength which interacts with the incident lights propagated through the respective interaction optical waveguides **3a, 3b** is high. Accordingly, as shown in FIG. **18,** in the case the width of the CPW gap W is narrow, the mathematical product $V\pi \cdot L$ is small, resulting in the realization of the LN optical modulator with low drive voltage. The practical limitation of the drive voltage for driving the LN optical modulator with a velocity more than 10 Gbps is in the range of approximately 5 V to 6 V, however, it is desirable that the drive voltage is still lower. Therefore, it is desirable that the width of the CPW gap W is narrow for realizing low drive voltage.

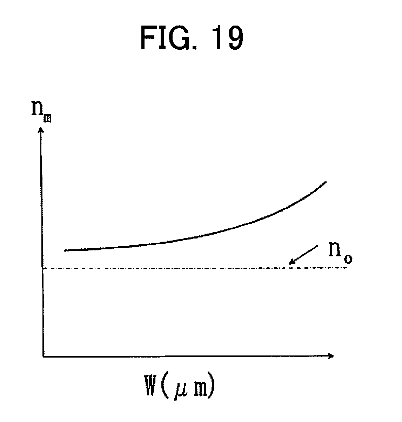

FIG. **19** is a graph showing the relationship between the microwave equivalent refractive index $n_m$ of

the high frequency electric signal and the width of the CPW gap W, together with the equivalent refractive index no ($\doteqdot$ 2.2) of the incident lights propagated through the respective interaction optical waveguides **3a, 3b.**

If the width of the CPW gap W is narrow, a large portion of the high frequency electric signal generated between the center electrode **4a** and the ground electrodes **4b, 4c** is propagated through the $SiO_2$ buffer layer **2** having a relative dielectric constant of about 4, resulting in the fact that the microwave equivalent refractive index $n_m$ can be reduced. Here, the relative dielectric constant of x-cut LN substrate 1 is about 35.

The fact that the microwave equivalent refractive index $n_m$ is generally larger than the equivalent refractive index no imposes a fundamental limit on high velocity operation of the LN optical modulator over a wide range of frequencies. Therefore, it is imperative that the microwave equivalent refractive index $n_m$ is close to the equivalent refractive index no of the incident light in order to drive the LN optical modulator with a velocity more than 10 Gbps. Accordingly, it is desirable that the width of the CPW gap W is narrow for realizing high velocity operation.

As described above, it is desirable that the width of the CPW gap W is narrow so that the drive voltage is reduced and that the microwave equivalent refractive index $n_m$ is close to the equivalent refractive index $n_0$ of the incident light. However, the problem arises when the width of the CPW gap W is less than 15 $\mu$m, which will be described in more detail hereinafter.

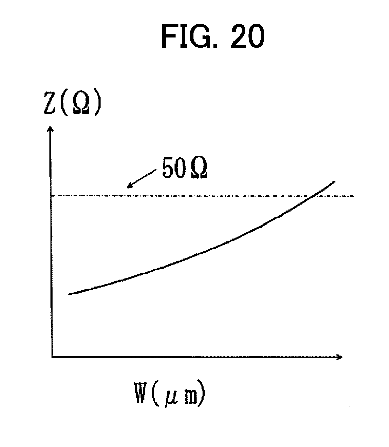

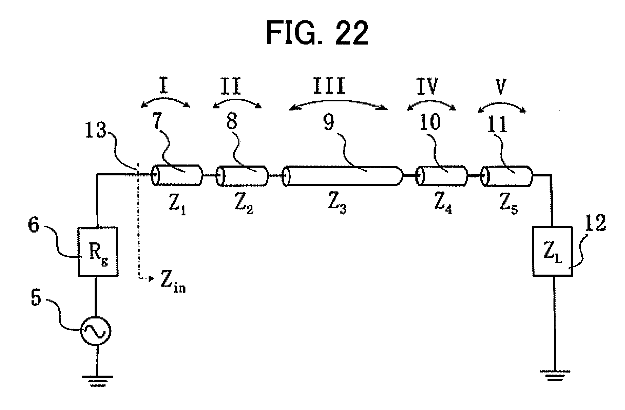

FIG. **20** is a graph showing the relationship between the characteristic impedance Z (corresponding to $Z_3$ in FIG. **22** shown below) of the CPW traveling wave electrode 4 including the center electrode **4a** and the ground electrodes **4b, 4c** and the width of the CPW gap W. In the case the CPW gap W is relatively narrow, the characteristic impedance Z is extremely low, for example, 30 or lower, resulting in the impedance mismatching between the CPW traveling wave electrode **4** and an external signal source having a characteristic impedance of approximately 50 $\Omega$. That is, a problem arises in that the reflection coefficient $S_{11}$ deteriorates.

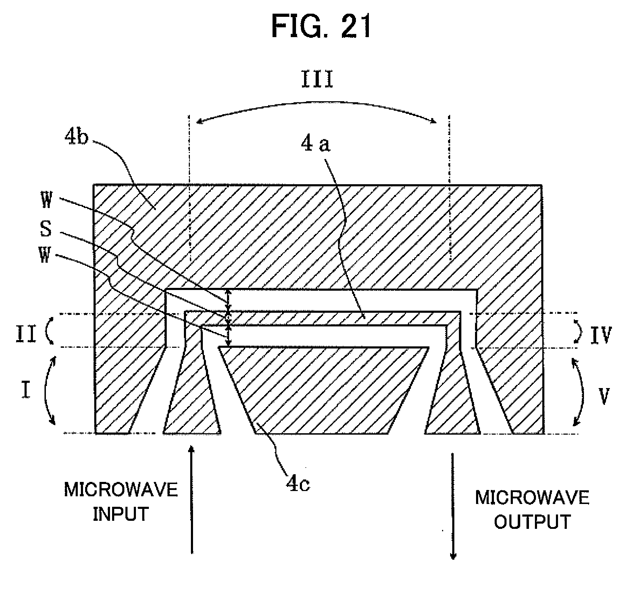

A more detailed discussion of this problem will be described hereinafter. FIG. 21 is a top plan view showing the CPW traveling wave electrode **4** of the x-cut LN optical modulator shown in FIG. **15,** which includes the center electrode **4a** and the ground electrodes **4b, 4c.**

Here, **I** represents an input feed-through portion which is connected to the core of a connector, a gold ribbon, or a gold wire (not shown in FIG. **21**) for applying the high frequency electric signal from the external signal source (not shown in FIG. **21**) to the CPW traveling wave electrode **4, II** represents a connection portion (or an input connection portion) for connecting the input feed-through portion **I** and an interaction portion **III, III** represents an interaction portion where the electric signal and the incident light interact with each other, **IV** represents a connection portion (or an output connection portion) for connecting an output feed-through portion **V** and the interaction portion **III.** The output feed-through portion **V** is connected to the core of a connector, a gold ribbon, a gold wire, or a terminator (not shown in FIG. **21**).

Hereinafter, a portion for having the high frequency electric signal fed therein, which is disposed at the center electrode of the input feed-through portion **I,** will be called "feeder portion", and a portion for outputting the high frequency electric signal, which is disposed at the center electrode of the output feed-through portion, will be called "output portion".

FIG. **22** shows an equivalent circuit for the x-cut LN optical modulator shown in FIG. **15.** Here, the reference numerals **5** and **6** correspond to external circuits. The reference numeral 5 represents an external signal source such as an electrical driver, and the reference numeral **6** represents a load resistance **6** (characteristic impedance **Rg**) of the external signal source. The reference numerals **7** to **11** correspond to equivalent lines between the input feed-through portion **I** and the output feed-through portion **V.** Here, the reference numerals **7, 8, 9, 10,** and **11** represent the input feed-through portion **I,** the input connection portion **II,** the interaction portion **III,** the output connection portion **IV,** and the output feed-through portion **V** respectively. The reference numeral **12** represents the terminator.

$Z_1$, $Z_2$, $Z_3$, $Z_4$, and $Z_5$ correspond to the characteristic impedances of the input feed-through portion **I** (or the line **7**), the input connection portion **II** (or the line **8**), the interaction portion **III** (or the line **9**), the output connection portion **IV** (or the line **10**), and the output feed-through portion **V** (or the line **11**) respectively. $Z_L$ represents the resistance of the terminator **12.**

A more detailed discussion of the problem concerning the impedance mismatching and the modulation bandwidth of the x-cut LN optical modulator of the first prior art shown in FIGS. **15** to FIG. **22** will be described hereinafter.

In FIG. **22,** $Z_{in}$ represents the input impedance of the x-cut LN optical modulator, which is seen by the load resistance **6** (impedance $R_g$) of the external signal source **5.** That is, $Z_{in}$ is the characteristic impedance obtained by synthesizing the characteristic impedance $Z_1$ of the input feed-through portion **I,** the characteristic impedance $Z_2$ of the input connection portion **II,** the characteristic impedance $Z_3$ of the interaction portion **III,** the characteristic impedance $Z_4$ of the output connection portion **IV,** the characteristic impedance $Z_5$ of the output feed-through portion **V,** and the resistance $Z_L$ of a terminator **12,** taking account of the length of each portion and the equivalent refractive index of the electric signal propagated through each portion. The reference numeral **13** in FIG. **22** represents the border between the load resistance **6** of the external signal source **5** and the input feed-through portion **I.**

A more detailed discussion of the case where the width of the CPW gap W is less than 15 $\mu$m so that the drive voltage is reduced and that the microwave

equivalent refractive index $n_m$ is close to the equivalent refractive index no of the incident light will be described hereinafter. In this case, the characteristic impedance $Z_3$ of the interaction portion **III** is, for example, 30 $\Omega$ or lower.

In the first prior art, the characteristic impedance of the other lines **7, 8, 10, 11,** that is, the characteristic impedance $Z_1$ of the input feed-through portion **I,** the characteristic impedance $Z_2$ of the input connection portion **II,** the characteristic impedance $Z_4$ of the output connection portion **IV,** the characteristic impedance $Z_5$ of the output feed-through portion **V,** and the resistance $Z_L$ of the terminator 12 are all equal to the characteristic impedance $Z_3$ of the interaction portion **III** (that is, $Z_1 = Z_2 = Z_3 = Z_4 = Z_5 = Z_L$).

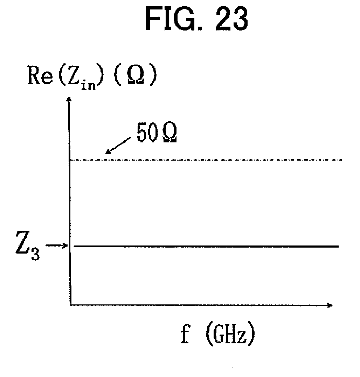

As a result, the real part $Re(Z_{in})$ of the input impedance $Z_{in}$ of the x-cut LN optical modulator, which is seen by the load resistance **6** of the external signal source **5** is almost independent of the frequency f as shown by the full line in FIG. **23,** and agrees well with the characteristic impedance $Z_3$ of the interaction portion **III,** and is, for example, 30 $\Omega$ or lower.

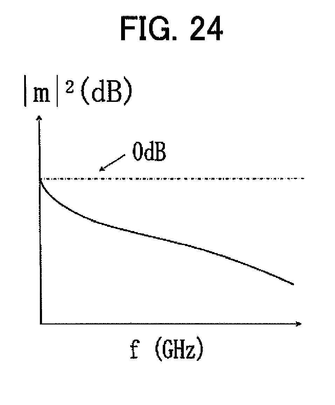

Accordingly, the modulation index of the incident light (power modulation index) $|m|^2$ rapidly deteriorates with the frequency f' as shown in FIG. **24** because of the impedance mismatching between the input impedance $Z_{in}$ and the load resistance **6** (impedance Rg) of the external signal source **5,** therefore, it is quite difficult to obtain 3 dB modulation bandwidth of 10 GHz

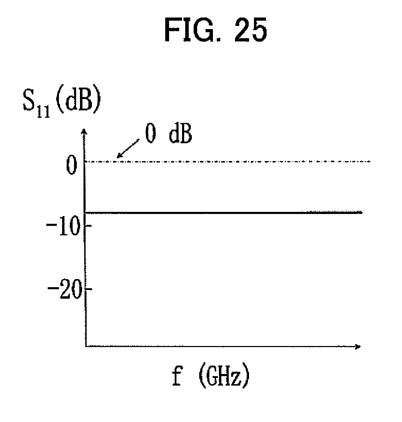

Assuming that $Z_1 = Z_2 = Z_3 = Z_4 = Z_5 = Z_L$, the reflection coefficient $S_{11}$ for the high frequency electric signal is higher (worse) than - 10 dB in the case where $Z_{in}$ (in this case, $Z_{in}=Z_3$) is lower than 30 $\Omega$, for example, 22 $\Omega$, as shown in FIG. **25**. In the case where Rg = 50 $\Omega$ and $Z_3 = 22$ $\Omega$, the reflection coefficient $S_{11}$ is - 8.2 dB. In the actual experiment, however, the reflection coefficient $S_{11}$ deteriorates to about - 5 dB because of the fact that reflected high frequency electric signals are superimposed due to the impedance mismatching. Here, the reflection coefficient $S_{11}$ for the high frequency electric signal is given by the following equation:

$$ S_{11} = |(R_g - Z_{in}) / (R_g + Z_{in})|^2 \quad (1) $$

When the high frequency electric signal is reflected back to the external signal source **5,** the jitter of the modulated optical pulses is disadvantageously increased.

(Second Prior Art)

The second prior art proposed in the patent document **1,** which reduces the impedance mismatching between the characteristic impedance $R_g$ of the external signal source **5** and the characteristic impedance $Z_3$ of the interaction portion **III** in the first prior art will now be described in detail. The constitutional elements of the embodiments the same as those of the first prior art shown in FIGS. **15** to **21** will not be described but bear the same reference numerals and legends as those of the prior art.

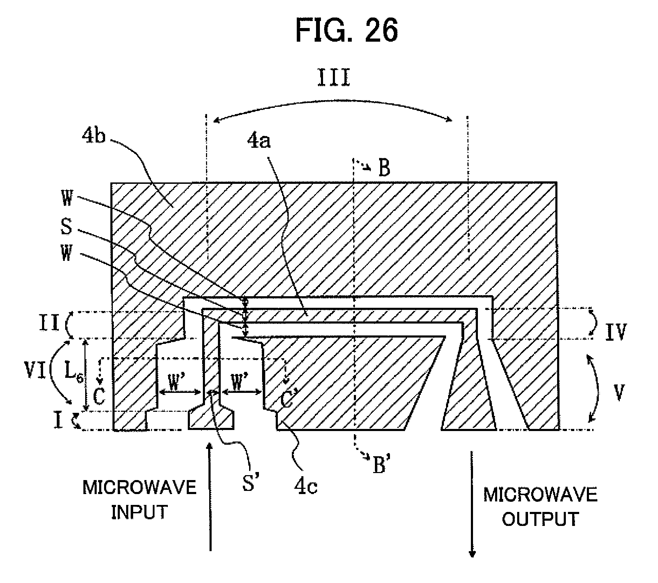

FIG. **26** is a top plan view showing a CPW traveling wave electrode **4** used for the second prior art. The second prior art is similar to the first prior art in that **I** represents an input feed-through portion, **II** represents an input connection portion, **III** represents an interaction portion, **IV** represents an output connection portion, and **V** represents an output feed-through portion. The output feed-through portion **V** is connected to the core of a connector, a gold ribbon, a gold wire, or a terminator (not shown in FIG. **26**), similar to the first prior art. The second prior art shown in FIG. **26** comprises an impedance transformation portion **VI** having a length of $L_6$ in addition to the components of the first prior art.

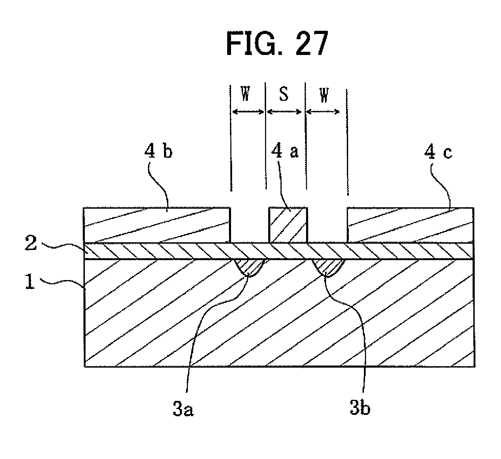

FIG. **27** is a cross-sectional view showing the interaction portion **III** of the x-cut LN optical modulator, taken along the line B-B' of FIG. **26**. Now suppose that the width of the CPW gap W is extremely narrow, for example, less than 15 $\mu$m, similar to the first prior art in FIG. **16**. As described above, the width of the CPW gap W is such narrow that the drive voltage is reduced and that the microwave equivalent refractive index $n_m$ of the high frequency electric signal is close to the equivalent refractive index no of the incident light. In this case, however, the characteristic impedance $Z_3$ of the interaction portion **III** is, for example, 30 $\Omega$ or lower (for example, 22 $\Omega$ as described in the first prior art).

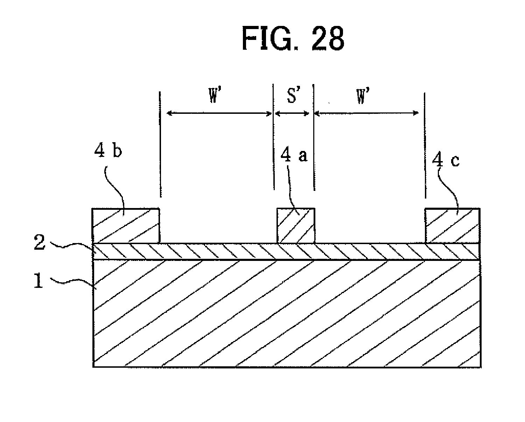

FIG. **28** is a cross-sectional view showing the impedance transformation portion **VI** of the x-cut LN optical modulator, taken along the line C-C' of FIG. **26**. The width of the CPW gap W' is about 50 $\mu$m, which is wider than that of the CPW gap W of the interaction portion **III.**

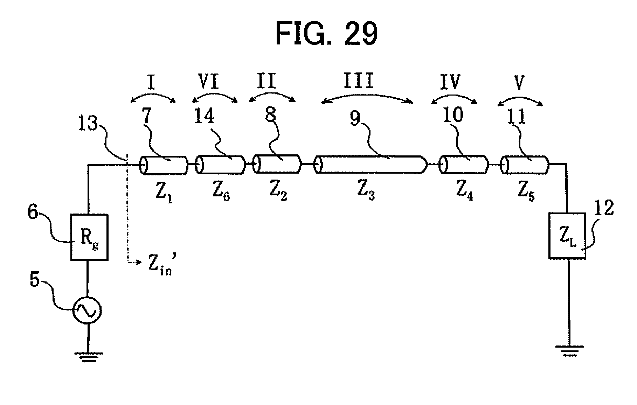

FIG. **29** shows an equivalent circuit for the second prior art. $Z_1$, $Z_2$, $Z_3$, $Z_4$, and $Z_5$ represent the characteristic impedances of the input feed-through portion **I** (or the line **7**), the input connection portion **II** (or the line **8**), the interaction portion **III** (or the line **9**), the output connection portion **IV** (or the line **10**), and the output feed-through portion **V** (or the line **11**) respectively, similar to the first prior art shown in FIG. **22**. The second prior art further comprises the impedance transformation portion **VI** (or the line **14**) having a characteristic impedance of $Z_6$.

The reference numeral **13** in FIG. **29** represents the border between a load resistance **6** (characteristic impedance $R_g$) of an external signal source **5** and the input feed-through portion **I**. In FIG. **29**, $Z_{in}'$ represents the input impedance of the x-cut LN optical modulator of the second prior art, which is seen by the external signal source **5** and the load resistance **6** of the external signal source **5**.

That is, $Z_{in}'$ is the characteristic impedance obtained by synthesizing the characteristic impedance $Z_1$ of the input feed-through portion **I,** the characteristic impedance $Z_6$ of the impedance transformation portion **VI,** the characteristic impedance $Z_2$ of the input connection portion **II,** the characteristic impedance $Z_3$ of the interac-

tion portion **III,** the characteristic impedance $Z_4$ of the output connection portion **IV,** the characteristic impedance $Z_5$ of the output feed-through portion **V,** and the resistance $Z_L$ of a terminator **12.**

As described above, the width of the CPW gap W is less than 15 μm in the second prior art, thereby resulting in the low characteristic impedance **$Z_3$** of the interaction portion **III,** for example, 22 Ω, 30 Ω or lower.

Now, the effect of the impedance transformation portion **VI** will be described. For simplicity, it is assumed that $Z_2 = Z_3 = Z_4 = Z_5 = Z_L$ where $Z_2$, $Z_3$, $Z_4$, and $Z_5$ correspond to the characteristic impedances of the input connection portion **II,** the interaction portion **III,** the output connection portion **IV,** and the output feed-through portion **V** respectively, and $Z_L$ is the resistance of the terminator **12.**

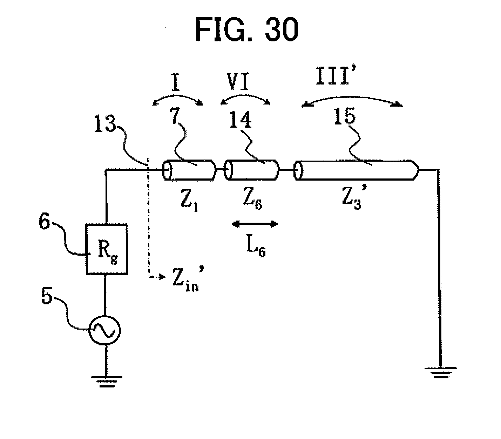

FIG. **30** shows an equivalent circuit for this case. Here, $Z_3'$ represents the characteristic impedance of a transmission line **15** as a synthesis portion **III',** which is obtained by synthesizing $Z_2$, $Z_3$, $Z_4$, $Z_5$, and $Z_L$. "$L_6$" described in FIG. **26,** which indicate the length of the impedance transformation portion **VI** having a characteristic impedance of $Z_6$, is also described in FIG. **30.**

It is assumed that the characteristic impedance $Z_1$ of the input feed-through portion **I** is 50 Ω, which is the same as the characteristic impedance Rg of the load resistance **6** of the external signal source **5.**

In the case where an impedance transformation portion having a characteristic impedance of Z and an electrical length of L is disposed between two different characteristic impedances $Z_i$ and $Z_j$, it has been well known that the impedance matching between $Z_i$ and $Z_j$ is realized and the electrical reflection is completely suppressed if Z, $Z_i$, and $Z_j$ satisfy the following equation:

$$Z = (Z_i \cdot Z_j)^{1/2} \quad (2)$$

$$L = \lambda / 4 \quad (3)$$

where:

λ is an electrical wavelength of the high frequency electric signal. Z which represents the geometric mean of $Z_i$ and $Z_j$ will be called "matching impedance" hereinafter.

In the second prior art, $Z_1$ corresponds to $Z_i$, $Z_3'$ corresponds to $Z_j$, $Z_6$ corresponds to Z, and $L_6$ corresponds to L. That is, the impedance matching between the input feed-through portion **I** ($Z_1$) and the interaction portion **III'** ($Z_3'$) is realized and the electrical reflection is completely suppressed. For simplicity, $Z_i$, $Z_j$ and Z in Equation (**2**) will be replaced with $Z_1$, $Z_3'$ and $Z_6$ respectively, and L in Equation (**3**) will be replaced with $L_6$ in the following description.

In the second prior art, λ is the wavelength of the high frequency electric signal which is propagated through the impedance transformation portion **VI** of the LN substrate, and will be called "guided wavelength" hereinafter. Now letting $\lambda_0$ represent the wavelength of the high frequency electric signal in a vacuum, and letting $n_m'$ represent the equivalent refractive index of the high frequency electric signal which is propagated through the LN substrate, λ is given by the following equation:

$$\lambda = \lambda_0 / n_m' \quad (4)$$

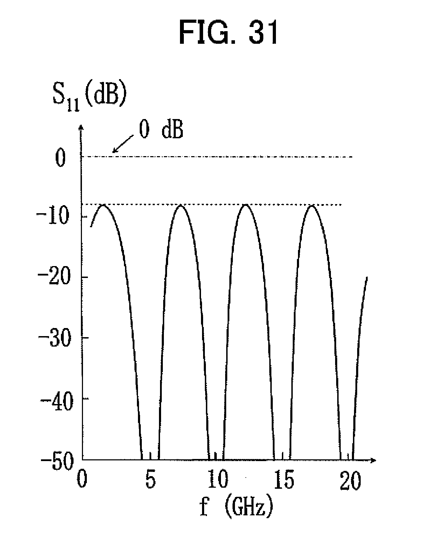

FIG. **31** shows an example of the calculated frequency f dependence of the reflection coefficient **$S_{11}$** in the case where $Z_1$ = Rg = 50 Ω, $Z_3'$ = 22 Ω. Here, the characteristic impedance $Z_6$ of the impedance transformation portion **VI** is 33.2 Ω. The length $L_6$ of the impedance transformation portion **VI** is 6 mm corresponding to an equivalent refractive index $n_m'$ of 2.5. The widths S and S' of the center electrodes in the interaction portion **III** and the impedance transformation portion **VI** respectively are the same as each other.

As shown in FIG. **31,** $S_{11}$ can be lower than -50 dB in certain specific frequencies such as 5 GHz, 10 GHz, 15 GHz, and 20 GHz, that is, the electrical reflection can be approximately completely suppressed, by designing the impedance transformation portion **VI** so as to satisfy both Equation (**2**) and Equation (**3**). In the actual experiment, however, the reflection coefficient $S_{11}$ is never to be negative infinite due to the electrical reflection from, for example, a connection portion of a cable.

As described above, the second prior art can approximately completely suppress the electrical reflection in certain specific frequencies (such as 5 GHz, 10 GHz, 15 GHz, and 20 GHz) which satisfy both Equation (**2**) and Equation (**3**). However, it is unnecessary for the reflection coefficient $S_{11}$ to be extremely low, for example, - 50 dB or lower. It is sufficient for the reflection coefficient $S_{11}$ to be - 12 dB, more preferably about -15 dB.

Meanwhile, as clearly seen in FIG. **31,** the reflection coefficient $S_{11}$ deteriorates to a level of - 8.2 dB indicated by the envelope (a broken line in FIG. **31**), similar to the level described in the first prior art, that is, the electric reflection characteristics is extremely bad for practical use.

Since the width S' of the center electrode of the impedance transformation portion **VI** is narrow and is the same as the width **S** of the center electrode of the interaction portion **III** (in general about 10 μm), the equivalent refractive index $n_m$ of the high frequency electric signal is small and is about 2.5. Therefore, the length of the impedance transformation portion **VI** is relatively long (in the second prior art, 6 mm) as seen in Equation (**3**) and Equation (**4**). Especially as shown in FIG. **26,** the transverse width of the LN optical modulator is large in the case the impedance transformation portion **VI** is formed perpendicularly or obliquely to the interaction portion **III,** resulting in the fact that the number of LN optical modulators produced from one LN substrate wafer is small.

Moreover, as described above, since the width S' of the center electrode of the impedance transformation portion **VI** is narrow and is the same as the width S of the center electrode of the interaction portion **III** (in general about 10 μm), the high frequency electric signal is easy to be attenuated, resulting in the fact that the high frequency electric signal is insufficient to be used for the modulation of the incident light at the interaction portion **III.**

(patent document 1)
Japanese Patent Laying-Open Publication No. 2005-37547

As described above, the optical modulator according to the first prior art, in which all the characteristic impedances of the portions forming the CPW traveling wave electrode such as the input and output feed-through portions, and the interaction portion are the same, has such a problem that the impedance mismatching occurs between the optical modulator and an external circuit, resulting in the fact that the frequency characteristics of the reflection coefficient is not good enough and that the modulation bandwidth rapidly deteriorates with the modulation frequency in the case where the buffer layer is thin, and the width of the gap of the CPW traveling wave electrode is narrow so that the drive voltage is reduced and that the microwave equivalent refractive index is close to the equivalent refractive index of the incident light. Meanwhile, the optical modulator according to the second prior art, raised to solve the problem encountered by the first prior art, comprising the impedance transformation portion which satisfies the above mentioned Equation (**2**) and Equation (**3**) can reduce the reflection coefficient to the extent that the reflection coefficient is extremely low in certain specific frequencies, that is, the electrical reflection can be approximately completely suppressed, however, the electric reflection characteristics in the other frequencies deteriorates to a level similar to that of the first prior art, which is not suitable for practical use. Moreover, the second prior art has such a problem that there is a limit to the number of LN optical modulators produced from one LN substrate wafer since the electrical equivalent refractive index is relatively small and the length of the impedance transformation portion given by λ/4 (λ represents the guided wavelength) is long because of the fact that the widths of the center electrode of the interaction portion for modulating the incident light and that of the impedance transformation portion are the same. Furthermore, the high frequency electric signal is easy to be attenuated since the center electrode of the impedance transformation portion is as narrow as that of the interaction portion, resulting in the fact that the high frequency electric signal is insufficient to be used at the interaction portion.

## SUMMARY OF THE INVENTION

In order to solve the above described problems, an optical modulator according to the present invention defined in claim **1** comprising: a substrate having an electro-optic effect; an optical waveguide formed in said substrate for having an incident light passed therethrough; and a traveling wave electrode for having a high frequency electric signal applied thereto to modulate a phase of said incident light, said traveling wave electrode being formed on one surface of said substrate, said traveling wave electrode including a center electrode and ground electrodes; said traveling wave electrode comprising an interaction portion where said phase of said incident light is modulated under the condition that said high frequency electric signal is applied to said traveling wave electrode, an input feed-through portion for applying said high frequency electric signal to said interaction portion from an external circuit, and an output feed-through portion for outputting said high frequency electric signal which is propagated through said interaction portion, in which said optical modulator further comprises at least one impedance transformation portion for reducing an impedance mismatching between a characteristic impedance of said interaction portion and at least one of characteristic impedances of said input feed-through portion, a connector electrically connected to said input feed-through portion, and said external circuit, at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit.

An optical modulator according to the present invention defined in claim **2,** in which at least one of said impedance transformation portions has a characteristic impedance which is the same as at least one geometric mean among a geometric mean of said characteristic impedances of said interaction portion and said input feed-through portion, a geometric mean of said characteristic impedances of said interaction portion and said connector electrically connected to said input feed-through portion, and a geometric mean of said characteristic impedances of said interaction portion and said external circuit.

An optical modulator according to the present invention defined in claim **3,** in which said high frequency electric signal which is applied to said input feed-through portion from said external circuit is propagated into said interaction portion, with residual reflection remaining and with electrical reflection being reduced as compared with the case where said optical modulator does not comprise said impedance transformation portion.

An optical modulator according to the present invention defined in claim **4,** in which a width of said center electrode of said impedance transformation portion is wider than that of said center electrode of said interaction portion.

An optical modulator according to the present invention defined in claim **5,** in which at least a part of said center electrode of said impedance transformation portion is aligned with a longitudinal direction of said optical waveguide.

An optical modulator according to the present invention defined in claim **6,** in which said impedance transformation portion is formed on a substrate which is different from said substrate on which said interaction portion is formed.

An optical modulator according to the present invention defined in claim **7,** in which said center electrode of said input feed-through portion has a feeder portion for having said high frequency electric signal fed therein, said center electrode of said output feed-through portion has an output portion for outputting said high frequency electric signal, a length of said interaction portion is longer than a distance along a longitudinal direction of said substrate between said feeder portion and said output portion.

An optical modulator according to the present invention defined in claim **8,** in which a distance along a longitudinal direction of said substrate between a starting point of a region in said interaction portion where said phase of said incident light is modulated, and a light entering facet for having said incident light entered into said optical waveguide, is shorter than a distance along a longitudinal direction of said substrate between said feeder portion for said high frequency electric signal and said light entering facet.

An optical modulator according to the present invention defined in claim **9,** in which a width of a gap between said center electrode and said ground electrodes of at least one of said impedance transformation portions is wider than that of a gap between said center electrode and said ground electrodes of said interaction portion.

An optical modulator according to the present invention defined in claim **10,** in which widths of said center electrodes of at least two of said impedance transformation portions are different from each other.

An optical modulator according to the present invention defined in claim **11,** in which a number of said impedance transformation portions having a characteristic impedance which is larger than a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, is the same as a number of said impedance transformation portions having a characteristic impedance which is smaller than at least one of said geometric means.

An optical modulator according to the present invention defined in claim **12** further comprises at least one said impedance transformation portion having a characteristic impedance which is larger than a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, at least one said impedance transformation portion having a characteristic impedance which is smaller than at least one of said geometric means, and at least one said impedance transformation portion having at least one of said geometric means.

An optical modulator according to the present invention defined in claim **13,** in which at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and a difference between said characteristic impedance of said at least one of said impedance transformation portions and at least one of said geometric means is within about $\pm$ 7 $\Omega$.

An optical modulator according to the present invention defmed in claim **14,** in which at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and a difference between said characteristic impedance of said at least one of said impedance transformation portions and at least one of said geometric mean is within about $\pm$15 $\Omega$.

An optical modulator according to the present invention defined in claim **15,** in which said substrate is made of semiconductor material.

According to the present invention, as a result of lowering the drive voltage of the optical modulator and bringing the velocity of the incident light near to that of the high frequency electric signal, the present invention can reduce the electrical reflection of the high frequency electric signal throughout a range of frequencies in which the optical modulator is operated, even in the case that the characteristic impedance of the interaction portion is too low, and the impedance mismatching occurs between the characteristic impedance of the interaction portion and that of the input feed-through portion, the connector electrically connected to the input feed-through portion, or the external circuit. The present invention is not formed so as to completely suppress the electrical reflection in certain specific frequencies or periodic frequencies. Although the residual electrical reflection remains to the extent practical, alternatively the present invention can improve the electric reflection characteristics over a wide range of frequencies. Therefore, it becomes possible to suppress the deterioration of the modulation index of the incident light in addition to reducing a bad influence on the external circuit, the jitter in optical pulses, or the like. The present invention has the further advantage of being applicable to not only the x-cut LN substrate but also applicable to other substrate such as a z-cut substrate, a semiconductor substrate, for example, an InP substrate or a GaAs substrate.

## BRIEF DESCRIPTION OF THE DRAWINGS

FIG. **1** is a top plan view showing the traveling wave electrode according to the first embodiment of the present invention;

FIG. **2** is a cross-sectional view taken along the line D-D' of FIG. **1**;

FIG. **3** is a cross-sectional view taken along the line E-E' of FIG. **1**;

FIG. **4** is a cross-sectional view taken along the line F-F' of FIG. **1**;

FIG. **5** is an equivalent circuit diagram of the optical modulator according to the first embodiment of the present invention;

FIG. **6** is an equivalent circuit diagram of the optical modulator according to the first embodiment of the present invention;

FIG. **7** is a graph illustrating the relationship between $S_{11}$ of the optical modulator according to the present invention and f;

FIG. **8** is a graph illustrating the relationship between $|m|^2$ of the optical modulator according to the present invention and f;

FIG. **9** is a top plan view showing the traveling wave electrode according to the second embodiment of the present invention;

FIG. **10** is an equivalent circuit diagram of the optical modulator according to the second embodiment of the present invention;

FIG. **11** is a top plan view showing the traveling wave electrode according to the third embodiment of the present invention;

FIG. **12** is a top plan view showing the traveling wave electrode according to the fourth embodiment of the present invention;

FIG. **13** is a top plan view showing the traveling wave electrode according to the fifth embodiment of the present invention;

FIG. **14** is a top plan view showing the traveling wave electrode according to the sixth embodiment of the present invention;

FIG. **15** is a perspective view showing the optical modulator according to the first prior art;

FIG. **16** is a cross-sectional view taken along the line A-A' of FIG. **15.**

FIG. **17** is a graph illustrating the operation of the optical modulator according to the first prior art;

FIG. **18** is a graph illustrating the relationship between $V\pi \cdot L$ and W of the optical modulator according to the first prior art;

FIG. **19** is a graph illustrating the relationship between $n_m$ and W of the optical modulator according to the first prior art;

FIG. **20** is a graph illustrating the relationship between Z and W of the optical modulator according to the first prior art;

FIG. **21** is a top plan view showing the traveling wave electrode according to the first prior art;

FIG. **22** is an equivalent circuit diagram of the optical modulator according to the first prior art;

FIG. **23** is a graph illustrating the relationship between $Z_{in}$ of the optical modulator according to the first prior art and f;

FIG. **24** is a graph illustrating the relationship between $|m|^2$ of the optical modulator according to the first prior art and f;

FIG. **25** is a graph illustrating the relationship between $S_{11}$ of the optical modulator according to the first prior art and f;

FIG. **26** is a top plan view showing the traveling wave electrode according to the second prior art;

FIG. **27** is a cross-sectional view taken along the line B-B' of FIG. **26;**

FIG. **28** is a cross-sectional view taken along the line C-C' of FIG. **26;**

FIG. **29** is an equivalent circuit diagram of the optical modulator according to the second prior art;

FIG. **30** is an equivalent circuit diagram of the optical modulator according to the second prior art; and

FIG. **31** is a graph illustrating the relationship between $S_{11}$ of the optical modulator according to the second prior art and f.

## DESCRIPTION OF THE REFERENCE NUMERALS

| | |
|---|---|
| **1:** | x-cut LN substrate (substrate, LN substrate) |
| **2:** | SiO2 buffer layer (buffer layer) |
| **3:** | optical waveguide |
| **3a, 3b:** | interaction optical waveguide (optical waveguide) |
| **4:** | traveling wave electrode |
| **4a:** | center electrode |
| **4b, 4c:** | ground electrode |
| **5:** | external signal source |

| | |
|---|---|
| **6:** | load resistance |
| **7:** | line corresponding to the input feed-through portion **I** |
| **8:** | line corresponding to input connection portion **II** |
| **9:** | line corresponding to the interaction portion **III** |
| **10:** | line corresponding to the output connection portion **IV** |
| **11:** | line corresponding to the output feed-through portion **V** |
| **12:** | terminator |
| **13:** | border between the load resistance of the external signal source and the optical modulator |
| **14:** | line corresponding to the impedance transformation portion **VI** |
| **15:** | transmission line including the interaction portion **III** |
| **16:** | line corresponding to the first impedance transformation portion **VII** |
| **17:** | line corresponding to the second impedance transformation portion **VIII** |
| **18:** | line corresponding to the first impedance transformation portion **IX** |
| **19:** | line corresponding to the second impedance transformation portion **X** |
| **20:** | line corresponding to the third impedance transformation portion **XI** |
| **30:** | light entering facet |

## DETAILED DESCRIPTION OF THE PREFERRED EMBODIMENTS

The embodiments of the optical modulator according to the present invention will now be described in detail. The constitutional elements of the embodiments the same as those of the prior art shown in FIGS. **15** to **31** will not be described but bear the same reference numerals and legends as those of the prior art.

(First Embodiment)

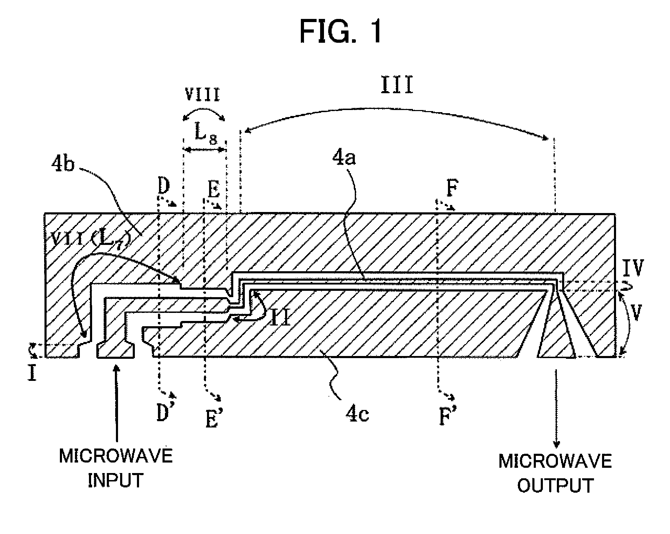

FIG. **1** is a top plan view showing a CPW traveling wave electrode **4** including a center electrode **4a** and ground electrodes **4b, 4c** used for the first embodiment of the present invention. The first embodiment is similar to the first and second prior arts in that **I** represents an input feed-through portion which is connected to the core of a connector (not shown in FIG. **1**). **II** represents an input connection portion, **III** represents an interaction portion, **IV** represents an output connection portion, and **V** represents an output feed-through portion. The output feed-through portion **V** may be connected to the core of a connector, a gold ribbon, a gold wire, or a terminator (not shown in FIG. **1**). **VII** represents a first impedance transformation portion having a length of $L_7$, and **VIII** represents a second impedance transformation portion having a length of $L_8$.

Although the center electrode and a gap between the center electrode and the ground electrodes of the output feed-through portion **V** have the linear configuration as shown in FIG. **1,** they may have a curved tapered configuration, the use of which results in the fact that a desired characteristic impedance can be more easily obtained. This concept is applicable to all the embodiments of the present invention.

Although the first embodiment of the present invention has the impedance transformation portion similar to the second prior art, it differs from the second prior art in that the impedance transformation portion includes two portions, that is, the first impedance transformation portion **VII** and the second impedance transformation portion **VIII**. The first impedance transformation portion **VII** and the second impedance transformation portion **VIII** are formed approximately parallel to an optical waveguide **3**, or optical waveguides **3a, 3b** (not shown in the drawings).

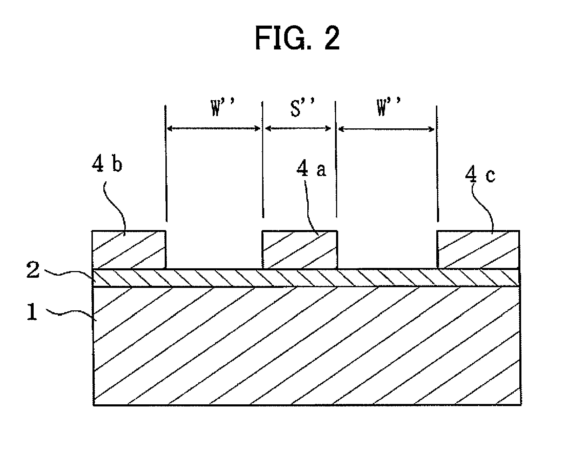

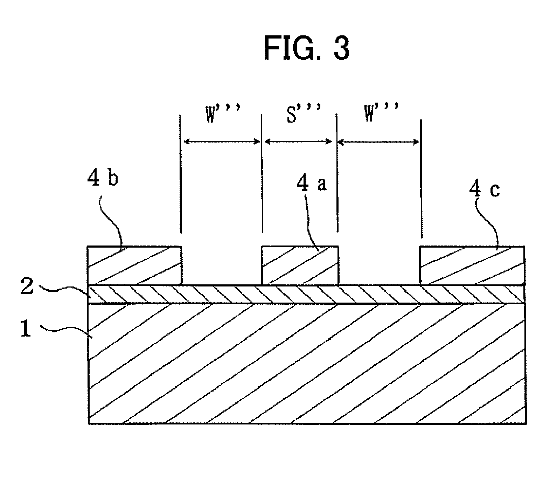

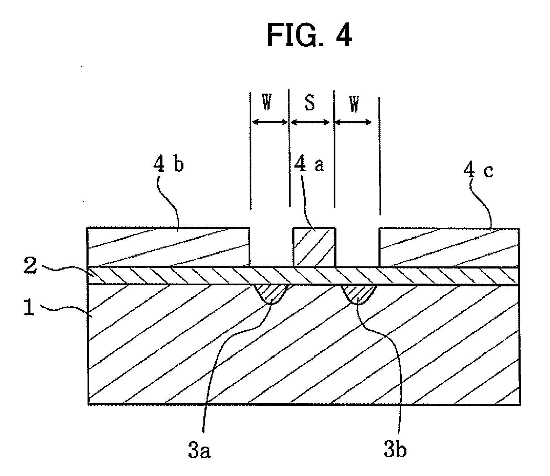

FIG. **2** is a cross-sectional view showing the first impedance transformation portion **VII,** taken along the line D-D' of FIG. **1.** S" and W" represent the width of the center electrode and the width of the gap respectively. FIG. **3** is a cross-sectional view showing the second impedance transformation portion **VIII,** taken along the line E-E' of FIG. **1.** S''' and W''' represent the width of the center electrode and the width of the gap respectively. FIG. **4** is a cross-sectional view showing the interaction portion **III,** taken along the line F-F', which is fundamentally the same as the FIG. **27** illustrating the second prior art.

In the first embodiment of the present invention, the widths of the center electrodes of the first impedance transformation portion **VII** and the second impedance transformation portion **VIII** are wider than the width (for example, 8 $\mu$m) of the center electrode of the interaction portion **III** so as to prevent a high frequency electric signal in the first impedance transformation portion **VII** and the second impedance transformation portion **VIII** from being attenuated. Here, the width of the center electrode of the first impedance transformation portion **VII** and that of the second impedance transformation portion **VIII** are the same, for example, 50 $\mu$m. That is, S" = S''' > S. In the case the impedance transformation portion includes a plurality of portions, the widths of the center electrodes of those portions may be different from each other. For example, the width S" of the center electrode of the first impedance transformation portion **VII** may be wider than the width S''' of the center electrode of the second impedance transformation portion **VIII,** and vice versa. It is preferred that S" > S''' to realize the impedance matching to the input feed-through portion **I.**

The width of the gap (for example, 70 $\mu$m) of the first impedance transformation portion **VII** is wider than the width of the gap (for example, 30 $\mu$m) of the second impedance transformation portion **VIII,** that is, W" > W''', so that the characteristic impedance ($Z_7$) of the first impedance transformation portion **VII** and the characteristic impedance ($Z_8$) of the second impedance transformation portion **VIII** are different from each other (Here, $Z_7 > Z_8$).

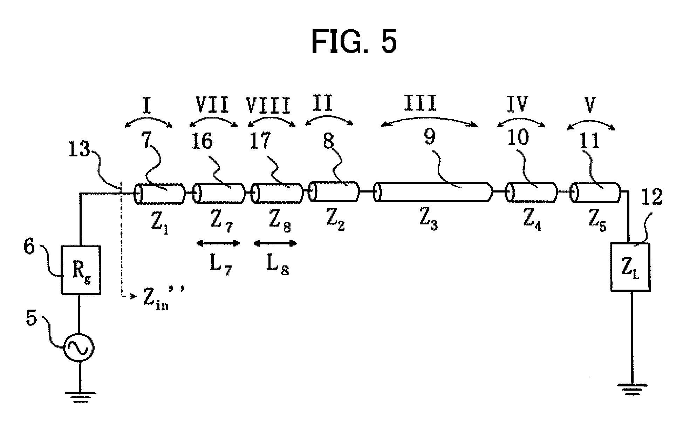

FIG. **5** shows an equivalent circuit for the first embodiment of the present invention. $Z_1$, $Z_2$, $Z_3$, $Z_4$, and $Z_5$ represent the characteristic impedances of the input feed-through portion **I** (or the line **7**), the input connection portion **II** (or the line **8**), the interaction portion **III** (or the line **9**), the output connection portion **IV** (or the line **10**), and the output feed-through portion **V** (or the line **11**) respectively, similar to the first prior art shown in FIG. **22** or the second prior art shown in FIG. **29.** The first embodiment of the present invention further comprises the first impedance transformation portion **VII** (or the line **16**) having a length of $L_7$ and a characteristic impedance of $Z_7$, and the second impedance transformation portion **VIII** (or the line **17**) having a length of $L_8$ and a characteristic impedance of $Z_8$.

Similar to the first and second prior arts, the reference numeral 13 in FIG. **5** represents the border between a load resistance **6** (characteristic impedance $R_g$) of an external signal source **5** and the input feed-through portion **I**. In FIG. **5,** $Z_{in}$" represents the input impedance of the x-cut LN optical modulator of the second prior art, which is seen by the external signal source **5** and the load resistance **6** of the external signal source **5.**

That is, $Z_{in}$" is the characteristic impedance obtained by synthesizing the characteristic impedance $Z_1$ of the input feed-through portion **I,** the characteristic impedance $Z_7$ of the first impedance transformation portion **VII,** the characteristic impedance $Z_8$ of the second impedance transformation portion **VIII,** the characteristic impedance $Z_2$ of the input connection portion **II,** the characteristic impedance $Z_3$ of the interaction portion **III,** the characteristic impedance $Z_4$ of the output connection portion **IV,** the characteristic impedance $Z_5$ of the output feed-through portion **V,** and the resistance $Z_L$ of a terminator **12.**

The following discussion is to illustrate the effect of the present invention by giving an example where the width of the CPW gap W is less than 15 $\mu$m, that is, the characteristic impedance $Z_3$ of the interaction portion **III** is low, for example, 22 $\Omega$.

Now, the effect of the first impedance transformation portion **VII** and the second impedance transformation portion **VIII** will be described. For simplicity, it is assumed that, similar to the prior art, $Z_2 = Z_3 = Z_4 = Z_5 = Z_L$ where $Z_2$ corresponds to the characteristic impedance of the input connection portion **II,** $Z_3$ corresponds to the characteristic impedance of the interaction portion **III,** $Z_4$ corresponds to the characteristic impedance of the output connection portion **IV,** $Z_5$ corresponds to the characteristic impedance of the output feed-through portion **V,** and $Z_L$ is the resistance of the terminator **12.**

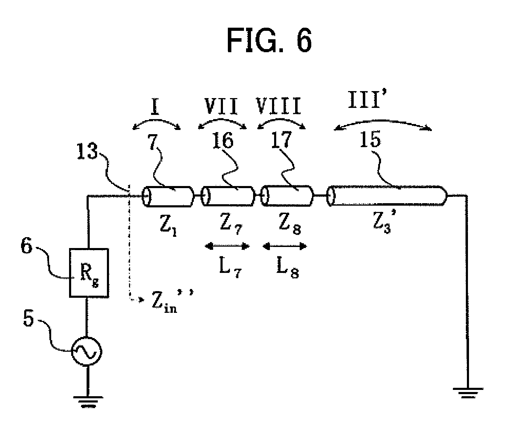

FIG. **6** shows an equivalent circuit for this case. Here, similar to the second prior art shown in FIG. **30,** $Z_3$' represents the characteristic impedance of a transmission line **15** as a synthesis portion **III',** which is obtained by synthesizing $Z_2$, $Z_3$, $Z_4$, $Z_5$, and $Z_L$. "$L_7$" and "$L_8$" described in FIG. **1,** which indicate the length of the first impedance transformation portion **VII** having the characteristic impedance $Z_7$ and the second impedance transformation portion **VIII** having the characteristic impedance $Z_8$ respectively, are also described in FIG. **6.**

For simplicity, it is assumed that the characteristic impedance $Z_1$ of the input feed-through portion **I** is 50 $\Omega$, which is the same as the characteristic impedance Rg of the load resistance **6** of the external signal source **5.** However, there are some cases where the characteristic impedance $Z_1$ of the input feed-through portion **I** is lower than 50 $\Omega$.

The core of the connector, a gold wire, or a gold ribbon (not shown in the drawings) (which will be called "connector core" hereinafter) connected to the input feed-through portion **I** is a thick metal having a thickness in the range of tens to hundreds of microns. Since a thick metal reduces the characteristic impedance, there are some cases where the characteristic impedance of the input feed-through portion **I** connected to the connector core (not shown in the drawings) is much lower than 50 $\Omega$.

Since the connector core (not shown in the drawings) is fixed to the input feed-through portion **I** in practical use of the LN optical modulator, the reduced characteristic impedance caused by the connection of the connector core (not shown in the drawings) and the input feed-through portion **I** is to be regarded as the characteristic impedance of the input feed-through portion **I.** This concept is particularly important in the case, which will be described subsequently, where the input feed-through portion **I** is regarded as a part of the impedance transformation portion. In all the embodiments of the present invention, similar to the prior art, a portion for having the high frequency electric signal fed therein, which is disposed at the center electrode of the input feed-through portion **I,** will be called "feeder portion", and a portion for outputting the high frequency electric signal, which is disposed at the center electrode of the output feed-through portion, will be called "output portion" hereinafter.

In the case the length of the input feed-through portion **I** is short, there are some cases where the characteristic impedance of the connector (not shown in the drawings) electrically connected to the input feed-through portion **I** is significant.

Since it is considered that impedance transformation is performed by the connector (not shown in the drawings), the load resistance 6 of the external signal source 5 shown in FIG.**6,** and the traveling wave electrode of the interaction portion **III** including the center electrode **4a** and the ground electrodes **4b, 4c,** the input feed-through portion **I** can be regarded as a part of the impedance transformation portion.

Even though the dimensions of the center electrodes and the ground electrodes of the input feed-through portion **I,** the input connection portion **II** and the interaction portion **III** are almost the same, that is, the whole of the center electrodes and the ground electrodes of the input feed-through portion **I,** the input connection portion **II,** and the interaction portion **III** are apparently seen as the input feed-through portion **I,** the region between the feeder portion connected to the connector core (not shown in the drawings) and the interaction portion **III** can be regarded as the impedance transformation portion.

While the characteristic impedance of the input feed-through portion **I** is generally 50 Ω, the characteristic impedance of the connector and the characteristic impedance Rg of the load resistance **6** of the external signal source **5** are also 50 Ω in many cases. Therefore, the value of $Z_1$ in Equation (**2**) giving the geometric mean can be selected from one of the characteristic impedances of the input feed-through portion **I,** the connector, and the load resistance **6** of the external signal source **5.**

The first embodiment of the present invention shown in FIG. **1** to FIG. **6** is completely different in concept from the second prior art shown in FIG. **26** to FIG. **31.** This will be described hereinafter in more detail.

In the second prior art, there is the absolute requirement that the value of the characteristic impedance $Z_6$ and the length $L_6$ of the impedance transformation portion **VI** satisfy both Equation (**2**) and Equation (**3**). In the case the characteristic impedance $Z_3$ of the interaction portion **III** is low, for example just over 22 Ω, the electrical reflection is nearly zero in certain frequencies as shown in FIG. **31.** However, the electrical reflection is too large in other frequencies for practical use of the x-cut LN optical modulator. In the second prior art, the characteristic impedance $Z_6$ of the impedance transformation portion **VI** is derived from Equation (**2**), and is 33.2 Ω.

In the first embodiment of the present invention, any geometric mean given by Equation (**2**) is not used. That is, in this embodiment, the characteristic impedance $Z_7$ of the first impedance transformation portion **VII** is, for example, 37 Ω, which is larger than 33.2 Ω given by Equation (**2**), while the characteristic impedance $Z_8$ of the second impedance transformation portion **VIII** is 29 Ω, which is smaller than 33.2 Ω given by Equation (**2**).

Although it is not as effective as the first embodiment, either one of the characteristic impedance $Z_7$ of the first impedance transformation portion **VII** and the characteristic impedance $Z_8$ of the second impedance transformation portion **VIII** may be 33.2 Ω given by Equation (**2**). In this case, it is still possible to suppress the electrical reflection to the extent necessary for practical use, in spite of the fact that (intentional) residual reflection remains over a wide range of frequencies, which is different in concept from the second prior art which can completely suppresses the electrical reflection only in certain specific frequencies.

Therefore, Equation (**2**) does not hold in the first embodiment of the present invention, so that the reflection coefficient $S_{11}$ is not extremely good in certain frequencies, and is not extremely bad in some periodic frequencies, which is contrary to the second prior art.

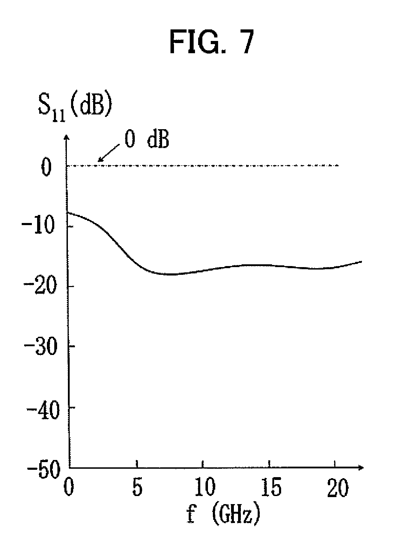

FIG. 7 shows the calculated reflection coefficient $S_{11}$ of the above mentioned configuration including the first impedance transformation portion **VII** and the second impedance transformation portion **VIII.** As shown in FIG. 7, the reflection coefficient $S_{11}$ is lower than - 15 dB over a wide range of frequencies, that is, the reflection coefficient $S_{11}$ is not extremely low in certain specific frequencies and does not deteriorate in other frequencies. The reflection coefficient $S_{11}$ of this value is considered to be sufficient for 10 Gbps optical transmission. Therefore, the high frequency electric signal which is reflected back to the external signal source 5 from the x-cut LN optical modulator is suppressed, so that it becomes possible to obtain modulated optical pulses with less jitter. Note that, the measurement result of the reflection coefficient $S_{11}$ agrees well with the calculated reflection coefficient $S_{11}$ shown in FIG. **7.**

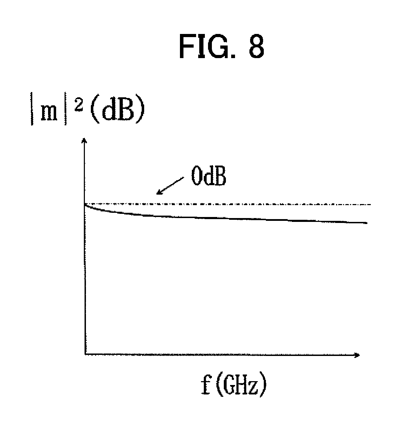

FIG. 8 shows the frequency response of the modulation index of the incident light (power modulation index) $|m|^2$. Since the suppression of the electrical reflection is necessary and sufficient, $|m|^2$ shows a smooth curve, indicating that it is possible to perform the optical modulation over a wide range of frequencies.

As described above, the present invention is not formed so as to completely suppress the electrical reflection in certain specific frequencies. In other words, although the intentional electrical reflection remains to some extent over a wide range of frequencies, alternatively it is possible to suppress the electrical reflection to some extent over a wide range of frequencies. As described above, this intentional reflection will be called "residual reflection".

It is unnecessary that the length $L_7$ of the first impedance transformation portion **VII** and the length $L_8$ of the second impedance transformation portion **VIII** satisfy Equation (**3**), since Equation (**2**) is not satisfied. That is, neither Equation (**2**) nor Equation (**3**) may be satisfied, and the electrical reflection remains to some extent in the first embodiment of the present invention, which is fundamentally different in concept from the second prior art which absolutely requires that both Equation (**2**) and Equation (**3**) are satisfied, and can completely suppresses the electrical reflection only in certain specific frequencies.

The present invention exhibits a remarkable effect in the case where the difference between the characteristic impedance $Z_7$ of the first impedance transformation portion **VII** and the geometric mean given by Equation (**2**), and the difference between the characteristic impedance $Z_8$ of the second impedance transformation portion **VIII** and the geometric mean given by Equation (**2**) are within about ± 15 Ω. If those differences are within about ± 7 Ω, the effect of the present invention is more remarkable. The concept that the characteristic impedance of the impedance transformation portion is different from the geometric mean given by Equation (**2**) within those ranges (that is, within about ± 7 Ω or ± 15 Ω), is not only applicable to this embodiment but also is applicable to all the embodiments of the present invention.

(Second Embodiment)

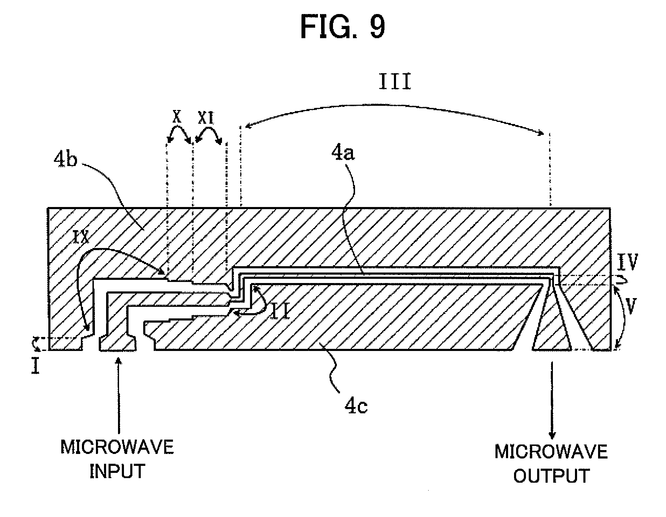

FIG. **9** is a top plan view showing a CPW traveling wave electrode **4** used for the second embodiment of the present invention. In this embodiment, **IX** represents a first impedance transformation portion, **X** represents a second impedance transformation portion, and **XI** represents a third impedance transformation portion.

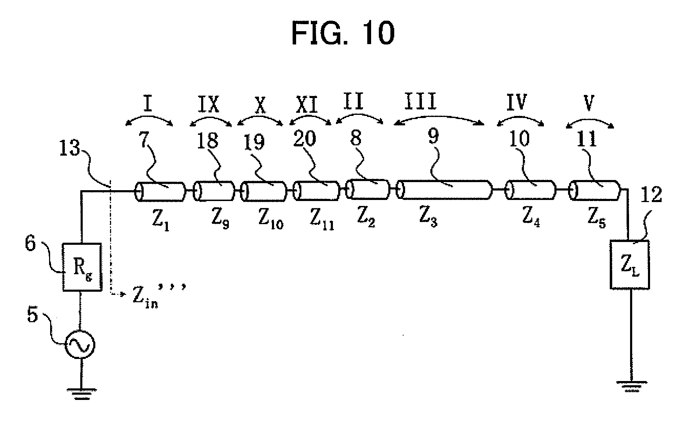

FIG. **10** shows an equivalent circuit for the second embodiment of the present invention. Although this equivalent circuit is almost similar to that of the first embodiment of the present invention, the features of this embodiment is that the impedance transformation portion includes three portions, that is, the first impedance transformation portion **IX** (or the line **18**) having a characteristic impedance of $Z_9$, the second impedance transformation portion **X** (or the line **19**) having a characteristic impedance of $Z_{10}$, and the third impedance transformation portion **XI** (or the line **20**) having a characteristic impedance of $Z_{11}$. Note that, the number of the impedance transformation portion may be more than **3.**

Similar to the first embodiment, the matching impedance given by Equation (**2**) in the second prior art is 33.2 $\Omega$ in the case the characteristic impedance $Z_3$ of the interaction portion **III** is 22 $\Omega$, and the characteristic impedance Rg of the load resistance 6 of the external signal source 5 is 50 $\Omega$.

Although the characteristic impedance $Z_9$ of the first impedance transformation portion **IX** (or the line **18**), the characteristic impedance $Z_{10}$ of the second impedance transformation portion **X** (or the line **19**), and the characteristic impedance $Z_{11}$ of the third impedance transformation portion **XI** (or the line **20**) may be all different from the value 33.2 $\Omega$ in the present invention, the width of the CPW gap in the second embodiment of the present invention is formed, for example, so that $Z_9 > Z_{10}$ = 33.2 $\Omega > Z_{11}$. Note that, two among $Z_9$, $Z_{10}$, and $Z_{11}$ may be equal to the matching impedance (33.2 $\Omega$).

In the second embodiment, the characteristic impedance $Z_{10}$ of the second impedance transformation portion **X** satisfies Equation (**2**) while the characteristic impedance $Z_9$ of the first impedance transformation portion **IX** (or the line **18**) and the characteristic impedance $Z_{11}$ of the third impedance transformation portion **XI** (or the line **20**) do not satisfy Equation (**2**). Here, it is unnecessary that Equation (**3**) is satisfied since $Z_9$ and $Z_{11}$ do not satisfy Equation (**2**).

Also in the second embodiment, it is possible to obtain the electric reflection characteristics similar to the first embodiment of the present invention shown in FIG. 7. That is, the reflection coefficient $S_{11}$ is not extremely good in certain frequencies while the reflection coefficient $S_{11}$ is not extremely bad in some periodic frequencies, which is contrary to the second prior art.

In other words, although the intentional electrical reflection remains to some extent over a wide range of frequencies, it is possible to suppress the electrical reflection to the extent practical over a wide range of frequencies. As described above, this intentional reflection will be called "residual reflection". That is, the electrical reflection remains to some extent also in the second embodiment of the present invention, which is fundamentally different in concept from the second prior art which requires that both Equation (**2**) and Equation (**3**) are satisfied, and can completely suppresses the electrical reflection.

(Third Embodiment)

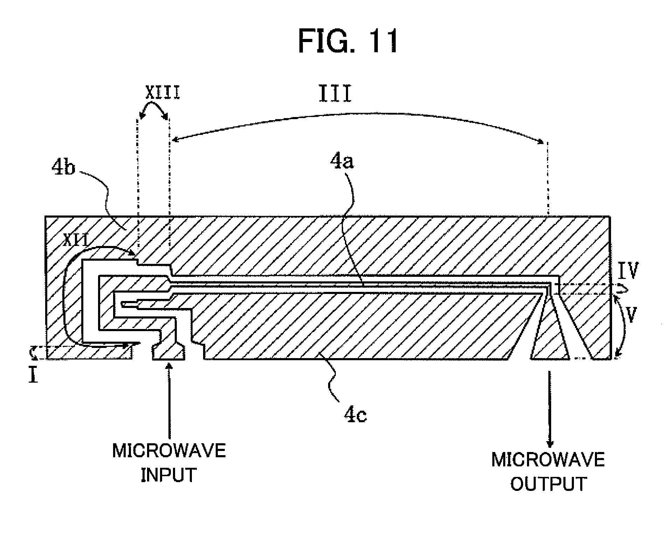

FIG. **11** is a top plan view showing a CPW traveling wave electrode **4** used for the third embodiment of the present invention. In this embodiment, **XII** represents a first impedance transformation portion, and **XIII** represents a second impedance transformation portion. In this embodiment, the first and second impedance transformation portions **XII, XIII** are formed to be folded back once in the direction of the interaction portion **III,** so that the interaction portion **III** can have a sufficiently long length. Note that this concept is applicable to other embodiments of the present invention including the second embodiment.

(Fourth Embodiment)

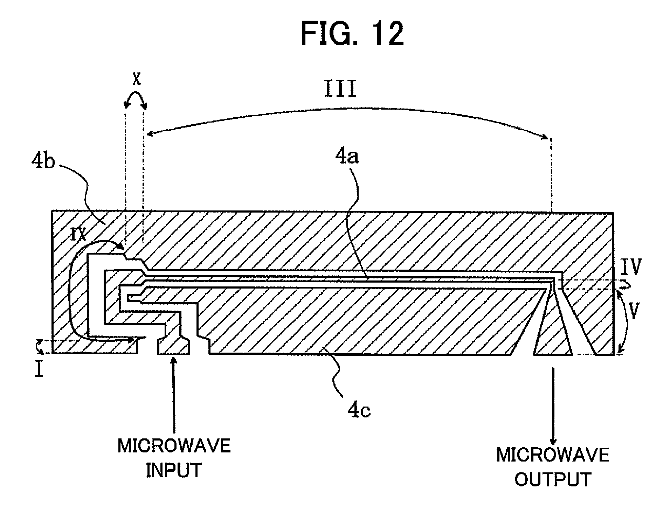

FIG. **12** is a top plan view showing a CPW traveling wave electrode **4** including a center electrode **4a** and ground electrodes **4b, 4c** used for the fourth embodiment of the present invention. In this embodiment, **IX** represents a first impedance transformation portion, and **X** represents a second impedance transformation portion. In this embodiment, the first and second impedance transformation portions **IX, X** are formed to be folded back once in the direction of the interaction portion III, similar to the third embodiment shown in FIG. **11.** However, the distance along the longitudinal direction of the substrate between a starting point of the interaction portion and the light entering facet is shorter than the distance along the longitudinal direction of the substrate between the feeder portion for the high frequency electric signal and the light entering facet, so that the interaction portion **III** can have a longer length than that of the third embodiment. Here, the optical waveguide **3** is the same as that of the first prior art, and the light entering facet is represented by the reference numeral **30** in FIG. **15** for the first prior art.

Thus, the concept of ensuring that the interaction portion **III** has an extremely long length by folding back the impedance transformation portion once in the direction of the interaction portion **III** is applicable to all the embodiments of the present invention.

Moreover, the output feed-through portion **V** may be folded at the end point of the interaction portion **III,** which is applicable to all the embodiments of the present invention.

(Fifth Embodiment)

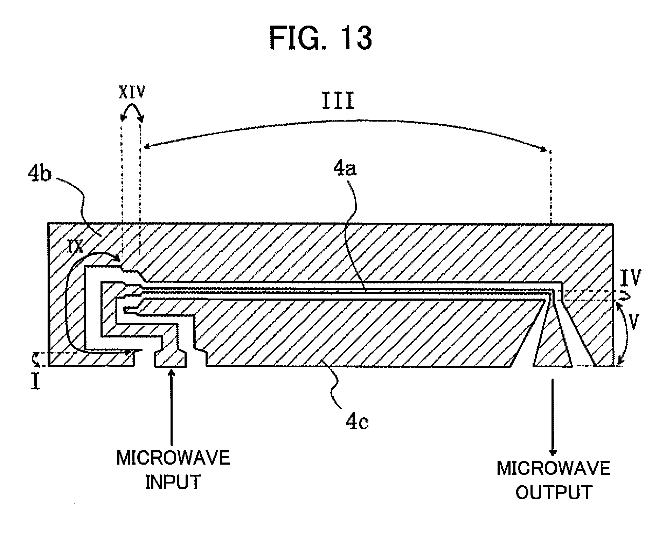

FIG. **13** is a top plan view showing a CPW traveling wave electrode **4** including a center electrode **4a** and ground electrodes **4b, 4c** used for the fifth embodiment of the present invention. The fifth embodiment is an improved version of the fourth embodiment shown in FIG. **12.** In this embodiment, **IX** represents a first impedance transformation portion, and **XIV** represents a second impedance transformation portion. As shown in FIG. **13,** the widths of the center electrodes of the first impedance transformation portion **IX** and the second impedance transformation portion **XIV** are different from each other. In this case, the width of the center electrode of the first impedance transformation portion **IX** is wider than that of the second impedance transformation portion **XIV,** so as to realize the electromagnetic matching to the input feed-through portion **I.**

In the above case where the impedance transformation portion includes a plurality of portions, the concept that the widths of the center electrodes of at least two portions are different from each other is applicable to all the embodiments of the present invention. In order to realize excellent characteristics, it is advisable that the width of the center electrode of an impedance transformation portion which is closest to the input feed-through portion is wider than that of an impedance transformation portion which is the farthest to the input feed-through portion, that is, the width of the impedance transformation portion which is closest to the input feed-through portion is close to that of the center electrode of the input feed-through portion.

(Sixth Embodiment)

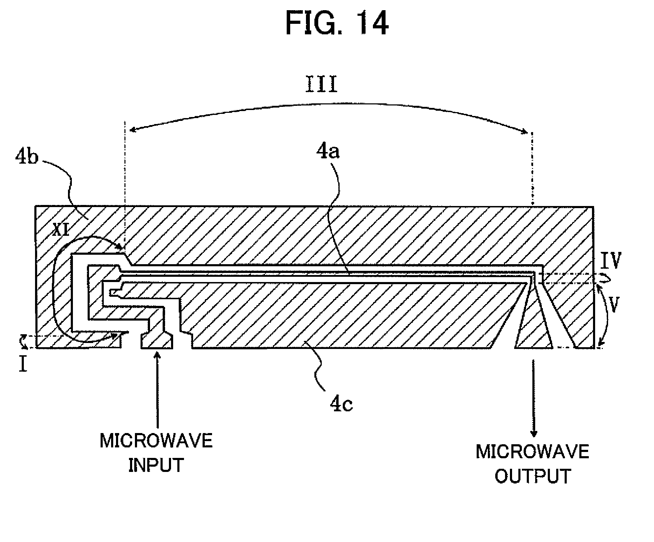

The impedance transformation portion includes a plurality of portions such as the first impedance transformation portion, the second impedance transformation portion, and the third impedance transformation portion in the above embodiments, however, the present invention can exhibit a similar effect with only one impedance transformation portion. One such embodiment is shown in FIG. **14** as the sixth embodiment. **XI** represents an impedance transformation portion in FIG. **14.**

Although it is not as effective as the embodiments having a plurality of the impedance transformation portions, the present invention can suppress the electrical reflection to a certain extent by using one impedance transformation portion having a characteristic impedance which does not satisfy Equation (**2**), that is, which is close to, and is slightly larger or smaller than the matching impedance given by Equation (**2**). It is unnecessary that Equation (**3**) is satisfied since Equation (**2**) is not satisfied. It is important that both Equation (**2**) and Equation (**3**) are satisfied in the prior art, while in this embodiment Equation (**2**) may be satisfied as long as Equation (**3**) is not satisfied. These concepts are applicable to all the embodiments of the present invention.

The characteristic impedance of the impedance transformation portion, as already mentioned, is slightly larger or smaller than the geometric mean given by Equation (**2**). The present invention exhibits a remarkable effect in the case the difference between the characteristic impedance and the geometric mean given by Equation (**2**) is within about $\pm 15\,\Omega$. If this difference is within about $\pm 7\,\Omega$, the effect of the present invention is more remarkable. This concept is applicable to all the embodiments of the present invention.

A more thorough discussion of the sixth embodiment will be described hereinafter. The high frequency electric signal passes through the input feed-through portion and the impedance transformation portion to the interaction portion. Considering that the input feed-through portion **I** can be regarded as a part of the impedance transformation portion, the sixth embodiment shown in FIG. **14** belongs to the present invention even if the impedance transformation portion **XI** satisfies both Equation (**2**) and Equation (**3**), as long as the synthesized characteristic impedance of the input feed-through portion **I** and the impedance transformation portion **XI** does not satisfy at least either one of Equation (**2**) and Equation (**3**), the residual reflection remains, and the electrical reflection is reduced.

That is, the sixth embodiment shown in FIG. **14** belongs to the present invention even if the impedance transformation portion **XI** is formed so that the impedance transformation portion **XI** satisfies both Equation (**2**) and Equation (**3**) between the connector (not shown in the drawings) having a characteristic impedance of $50\,\Omega$ and the traveling wave electrode **4** including the center electrode **4a** and the ground electrodes **4b, 4c,** as long as the characteristic impedance of the input feed-through portion **I** is not the same as that of the connector. It is because the input feed-through portion **I** does not satisfy the above mentioned condition of Equation (**2**) and Equation (**3**), and works as a part of a new impedance transformation portion which can reduce the electrical reflection to the extent practical over a wide range of frequencies with the residual reflection remaining over a wide range of frequencies.

For example, the impedance transformation portion **XI** is formed so that the impedance transformation portion **XI** satisfies both Equation (**2**) and Equation (**3**) between the input feed-through portion **I** and the interaction portion **III,** however, the impedance transformation portion **XI** does not satisfy Equation (**2**) and Equation (**3**) in reality because of the fact that the input feed-through portion **I** is connected to the connector core, and the thick metal of the connector core reduces the characteristic impedance to below that of the input feed-through portion **I**. In this case, the present invention is applied to between the connector and the interaction portion **III.** Moreover, this concept can be true for the load resistance of the external signal source (not shown in the drawings) and the interaction portion **III.** That is, it is possible that an electrical transmission line element including the connector (not shown in the drawings) which is between the load resistance and the interaction portion **III** is formed as an impedance transformation portion which can reduce the electrical reflection to the extent practical over a wide range of frequencies with the residual reflection remaining over a wide range of frequencies. These concepts are applicable to all the embodiments of the present invention.

(Each Embodiment)

There has been described about the fact that the traveling wave electrode is constituted by the CPW electrode, the traveling wave electrode may be constituted by an asymmetric coplanar strip (ACPS), a symmetric coplanar strip (CPS), or the like. Needless to say, the traveling wave electrode may be replaced by an electrode such as a lumped parameter electrode. The Mach-Zehnder optical waveguide may be replaced by any other optical waveguide such as an optical directional coupler and a straight type optical waveguide. Moreover, at least the interaction portion **III** may have a ridge structure.

As described above, in the case the impedance transformation portion includes a plurality of portions, the CPW gaps are formed so that the characteristic impedances of the portions are different from each other. Alternatively, the widths of the center electrode, or both the widths of the center electrode and the gaps may be different from each other. This concept is also applicable to the case where the traveling wave electrode may be constituted by an ACPS, a CPS, or the like.

In the above described embodiment, at least a part of the impedance transformation portion is formed approximately parallel to the interaction optical waveguides. Note that such configuration does not affect the performance of the impedance transformation portion. Therefore, at least a part of the impedance transformation portion may be formed obliquely or perpendicularly to the interaction optical waveguides.

The characteristic impedance of at least a part of the impedance transformation portion, as already mentioned, is slightly larger or smaller than the geometric mean given by Equation (**2**). Calculations and experiments revealed that the present invention exhibits a remarkable effect in the case the difference between the characteristic impedance and the geometric mean given by Equation (**2**) is within about $\pm$ 15 $\Omega$. If this difference is within about $\pm$ 7 $\Omega$, the effect of the present invention is more remarkable.

In the case the number of the impedance transformation portions is an even number, the number of the impedance transformation portions having a characteristic impedance larger than the characteristic impedance given by Equation (**2**) is preferably the same as the number of the impedance transformation portions having a characteristic impedance smaller than the characteristic impedance given by Equation (**2**). Meanwhile, in the case the number of the impedance transformation portions is an odd number, the characteristic impedance of a part of the impedance transformation portions is preferably the same as the characteristic impedance given by Equation (**2**), in addition to the above mentioned concept on the number of the impedance transformation portions. By employing these concepts, it becomes possible to suppress the electrical reflection over a wide range of frequencies quite effectively.

The values of the characteristic impedances of the first impedance transformation portion, the second impedance transformation portion, and the third impedance transformation portion may be different from the values described in this specification.

In the case where two interaction optical waveguides of the Mach-Zehnder optical waveguide are disposed at the both side of the center electrode, it becomes possible to avoid the deterioration of the DC and dynamic extinction ratio as long as the widths of the two interaction optical waveguides are different from each other.

Furthermore, in each embodiment, the LN substrate may have an x-cut state, a y-cut state, or a z-cut state. In other words, the LN substrate may have a surface direction such that x-axis, y-axis, or z-axis of the crystal is perpendicular to the surface (cut surface) of the LN substrate. The LN substrate may be formed such that the main surface direction, the direction as described above, is mixed with a sub surface direction different from the main surface direction. The LN substrate may be replaced by other substrate such as lithium tantalite and a semiconductor.

In the above description, the impedance transformation portion is formed between the feed-through portion and the interaction portion of the LN optical modulator, that is, on the LN optical modulator chip. It is possible to obtain the same effect even in the case where the impedance transformation portion is formed on a substrate which is different from the LN optical modulator chip, such as an alumina substrate, an LN substrate, or the like.

The present invention is applicable to various kinds of optical devices using the traveling wave electrode such as an electroabsorption modulator formed on a semiconductor substrate such as an InP substrate and a GaAs substrate, and a Mach-Zehnder optical modulator.

**INDUSTRIAL APPLICABILITY**

In accordance with the present invention, there is provided an optical modulator which can tremendously improve the RF modulation characteristics, being available for an optical modulator with high modulation speed and low drive voltage.

## Claims

1. An optical modulator comprising:

   a substrate having an electro-optic effect;
   an optical waveguide formed in said substrate for having an incident light passed therethrough; and
   a traveling wave electrode for having a high frequency electric signal applied thereto to modulate a phase of said incident light, said traveling wave electrode being formed on one surface of said substrate, said traveling wave electrode including a center electrode and ground electrodes;
   said traveling wave electrode comprising an interaction portion where said phase of said incident light is modulated under the condition that said high frequency electric signal is applied to said traveling wave electrode, an input feed-through portion for applying said high frequency electric signal to said interaction portion from an external circuit, and an output feed-through portion for outputting said high frequency electric signal which is propagated through said interaction portion, in which
   said optical modulator further comprises at least one impedance transformation portion for reducing an impedance mismatching between a characteristic impedance of said interaction portion and at least one of characteristic impedances of said input feed-through portion, a connector electrically connected to said input feed-through portion, and said external circuit,
   at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit.

2. An optical modulator as set forth in claim **1,** in which
   at least one of said impedance transformation portions has a characteristic impedance which is the same as at least one geometric mean among a geometric mean of said characteristic impedances of said interaction portion and said input feed-through portion, a geometric mean of said characteristic impedances of said interaction portion and said connector electrically connected to said input feed-through portion, and a geometric mean of said characteristic impedances of said interaction portion and said external circuit.

3. An optical modulator as set forth in any one of claims **1** and **2,** in which
   said high frequency electric signal which is applied to said input feed-through portion from said external circuit is propagated into said interaction portion, with residual reflection remaining and with electrical reflection being reduced as compared with the case where said optical modulator does not comprise said impedance transformation portion.

4. An optical modulator as set forth in any one of claims **1** to **3,** in which
   a width of said center electrode of said impedance transformation portion is wider than that of said center electrode of said interaction portion.

5. An optical modulator as set forth in any one of claims **1** to **4,** in which
   at least a part of said center electrode of said impedance transformation portion is aligned with a longitudinal direction of said optical waveguide.

6. An optical modulator as set forth in any one of claims **1** to **5,** in which
   said impedance transformation portion is formed on a substrate which is different from said substrate on which said interaction portion is formed.

7. An optical modulator as set forth in any one of claims **1** to **6,** in which
   said center electrode of said input feed-through portion has a feeder portion for having said high frequency electric signal fed therein,
   said center electrode of said output feed-through portion has an output portion for outputting said high frequency electric signal,
   a length of said interaction portion is longer than a distance along a longitudinal direction of said substrate between said feeder portion and said output portion.

8. An optical modulator as set forth in any one of claims **1** to **7,** in which
   a distance along a longitudinal direction of said substrate between a starting point of a region in said interaction portion where said phase of said incident light is modulated, and a light entering facet for having said incident light entered into said optical waveguide, is shorter than a distance along a longitudinal direction of said substrate between said feeder portion for said high frequency electric signal and said light entering facet.

9. An optical modulator as set forth in any one of claims **1** to **8,** in which
   a width of a gap between said center electrode and said ground electrodes of at least one of said impedance transformation portions is wider than that of a gap between said center electrode and said ground electrodes of said interaction portion.

10. An optical modulator as set forth in any one of claims **1** to **9,** in which
widths of said center electrodes of at least two of said impedance transformation portions are different from each other.

11. An optical modulator as set forth in any one of claims **1** to **10,** in which
a number of said impedance transformation portions having a characteristic impedance which is larger than a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, is the same as a number of said impedance transformation portions having a characteristic impedance which is smaller than at least one of said geometric means.

12. An optical modulator as set forth in any one of claims **1** to **11,** which further comprises
at least one said impedance transformation portion having a characteristic impedance which is larger than a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit,
at least one said impedance transformation portion having a characteristic impedance which is smaller than at least one of said geometric means, and
at least one said impedance transformation portion having at least one of said geometric means.

13. An optical modulator as set forth in any one of claims **1** to **12,** in which
at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and
a difference between said characteristic impedance of said at least one of said impedance transformation portions and at least one of said geometric means

is within about $\pm$ 7 $\Omega$.

14. An optical modulator as set forth in any one of claims **1** to **12,** in which
at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and
a difference between said characteristic impedance of said at least one of said impedance transformation portions and at least one of said geometric mean is within about $\pm$ 15 $\Omega$.

15. An optical modulator as set forth in any one of claims **1** to **14,** in which
said substrate is made of semiconductor material.

**Amended claims under Art. 19.1 PCT**

**1.** Amended): An optical modulator comprising:

a substrate having an electro-optic effect;
an optical waveguide formed in said substrate for having an incident light passed therethrough; and
a traveling wave electrode for having a high frequency electric signal applied thereto to modulate a phase of said incident light, said traveling wave electrode being formed on one surface of said substrate, said traveling wave electrode including a center electrode and ground electrodes;
said traveling wave electrode comprising an interaction portion where said phase of said incident light is modulated under the condition that said high frequency electric signal is applied to said traveling wave electrode, an input feed-through portion for applying said high frequency electric signal to said interaction portion from an external circuit, and an output feed-through portion for outputting said high frequency electric signal which is propagated through said interaction portion, in which
said optical modulator further comprises at least one impedance transformation portion for reducing an impedance mismatching between a characteristic impedance of said interaction portion and at least one of characteristic impedances of said input feed-through portion, a connector electrically connected to said input feed-through portion, and said external circuit,

said high frequency electric signal which is applied to said input feed-through portion from said external circuit is propagated into said interaction portion, with residual reflection remaining and with electrical reflection being reduced as compared with the case where said optical modulator does not comprise said impedance transformation portion.

**2.** New): An optical modulator as set forth in claim **1,** in which
said impedance transformation portion is formed as a part of said traveling wave electrode.

**3.** New): An optical modulator as set forth in any one of claims **1** and **2,** in which
said impedance transformation portion is formed between said interaction portion and said input feed-through portion as a part of said traveling wave electrode.

**4.** New): An optical modulator as set forth in any one of claims **1** and **2,** in which
said impedance transformation portion includes a part of said traveling wave electrode between said interaction portion and said input feed-through portion, and said input feed-through portion.

**5.** Amended): An optical modulator as set forth in any one of claims **1** to **4,** in which
at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit.

**6.** Amended): An optical modulator as set forth in any one of claims **1** to **4,** in which
at least one of said impedance transformation portions has a characteristic impedance which is the same as at least one geometric mean among a geometric mean of said characteristic impedances of said interaction portion and said input feed-through portion, a geometric mean of said characteristic impedances of said interaction portion and said connector electrically connected to said input feed-through portion, and a geometric mean of said characteristic impedances of said interaction portion and said external circuit.

**7.** Amended): An optical modulator as set forth in any one of claims **1** to **6,** in which
a width of said center electrode of said impedance transformation portion is wider than that of said center electrode of said interaction portion.

**8.** Amended): An optical modulator as set forth in any one of claims **1** to **7,** in which
at least a part of said center electrode of said impedance transformation portion is aligned with a longitudinal direction of said optical waveguide.

**9.** Amended): An optical modulator as set forth in any one of claims **1** to **8,** in which
said impedance transformation portion is formed on a substrate which is different from said substrate on which said interaction portion is formed.

**10.** Amended): An optical modulator as set forth in any one of claims **1** to **9,** in which
said center electrode of said input feed-through portion has a feeder portion for having said high frequency electric signal fed therein,
said center electrode of said output feed-through portion has an output portion for outputting said high frequency electric signal,
a length of said interaction portion is longer than a distance along a longitudinal direction of said substrate between said feeder portion and said output portion.

**11.** Amended): An optical modulator as set forth in any one of claims **1** to **10,** in which
a distance along a longitudinal direction of said substrate between a starting point of a region in said interaction portion where said phase of said incident light is modulated, and a light entering facet for having said incident light entered into said optical waveguide, is shorter than a distance along a longitudinal direction of said substrate between said feeder portion for said high frequency electric signal and said light entering facet.

**12.** Amended): An optical modulator as set forth in any one of claims **1** to **11,** in which
a width of a gap between said center electrode and said ground electrodes of at least one of said impedance transformation portions is wider than that of a gap between said center electrode and said ground electrodes of said interaction portion.

**13.** Amended): An optical modulator as set forth in any one of claims **1** to **12,** in which
widths of said center electrodes of at least two of said impedance transformation portions are different from each other.

**14.** mended): An optical modulator as set forth in any one of claims **1** to **13,** in which
a number of said impedance transformation portions having a characteristic impedance which is larger than a geometric mean of said characteristic impedances of said interaction portion and said input feedthrough portion, a geometric mean of said characteristic impedances of said interaction portion and said connector electrically connected to said input feed-through portion, or a geometric mean of said characteristic impedances of said interaction portion and said external circuit, is the same as a number of said impedance transformation portions having a characteristic impedance which is smaller than at least one of said geometric means.

**15.** Amended): An optical modulator as set forth in any one of claims **1** to **14,** which further comprises at least one said impedance transformation portion having a characteristic impedance which is larger than a geometric mean of said characteristic impedances of said interaction portion and said input feedthrough portion, a geometric mean of said characteristic impedances of said interaction portion and said connector electrically connected to said input feed-through portion, or a geometric mean of said characteristic impedances of said interaction portion and said external circuit,
at least one said impedance transformation portion having a characteristic impedance which is smaller than at least one of said geometric means, and
at least one said impedance transformation portion having at least one of said geometric means.

**16.** Amended): An optical modulator as set forth in any one of claims **1** to **15,** in which
at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and
a difference between said characteristic impedance of said at least one of said impedance transformation portions and at least one of said geometric means is within about ± 7 Ω.

**17.** Amended): An optical modulator as set forth in any one of claims **1** to **15,** in which
at least one of said impedance transformation portions has a characteristic impedance which is different from a geometric mean of said characteristic impedances of said interaction portion and said input feed-through portion, a geometric mean of said characteristic impedances of said interaction portion and said connector electrically connected to said input feed-through portion, or a geometric mean of said characteristic impedances of said interaction portion and said external circuit, and
a difference between said characteristic impedance of said at least one of said impedance transformation portions and at least one of said geometric mean is within about ± 15 Ω.

**18.** New): An optical modulator as set forth in any one of claims **1** to **17,** in which
said substrate is made of lithium niobate.

**19.** Amended): An optical modulator as set forth in any one of claims **1** to **17,** in which
said substrate is made of semiconductor material.

# FIG. 1

MICROWAVE
INPUT

MICROWAVE
OUTPUT

# FIG. 2

# FIG. 3

# FIG. 4

# FIG. 5

# FIG. 6

# FIG. 7

## FIG. 8

$|m|^2 (dB)$

0dB

f (GHz)

# FIG. 9

MICROWAVE
INPUT

MICROWAVE
OUTPUT

# FIG. 10

# FIG. 11

MICROWAVE
INPUT

MICROWAVE
OUTPUT

# FIG. 12

MICROWAVE
INPUT

MICROWAVE
OUTPUT

# FIG. 13

MICROWAVE
INPUT

MICROWAVE
OUTPUT

# FIG. 14

MICROWAVE
INPUT

MICROWAVE
OUTPUT

# FIG. 15

OPTICAL OUTPUT

MICROWAVE OUTPUT

MICROWAVE INPUT

OPTICAL INPUT

# FIG. 16

# FIG. 17

OPTICAL
OUTPUT

VOLTAGE

Vb

# FIG. 18

FIG. 19

# FIG. 20

# FIG. 21

# FIG. 22

# FIG. 23

$\mathrm{Re}(Z_{in})\ (\Omega)$

50 Ω

$Z_3 \rightarrow$

f (GHz)

# FIG. 24

$|m|^2 (dB)$

0dB

f (GHz)

# FIG. 25

# FIG. 26

MICROWAVE
INPUT

MICROWAVE
OUTPUT

# FIG. 27

# FIG. 28

# FIG. 29

# FIG. 30

# FIG. 31

## INTERNATIONAL SEARCH REPORT

| | International application No. |
|---|---|
| | PCT/JP2007/061646 |

**A. CLASSIFICATION OF SUBJECT MATTER**
*G02F1/03*(2006.01)i

According to International Patent Classification (IPC) or to both national classification and IPC

**B. FIELDS SEARCHED**

Minimum documentation searched (classification system followed by classification symbols)
G02F1/03

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2005-37547 A (Fujitsu Ltd.), | 1,3-5,9,13, |
| | 10 February, 2005 (10.02.05), | 14 |
| Y | & US 2005-13522 A1 | 2,6-8,10-12, |
| | | 15 |
| X | JP 2004-163859 A (Sumitomo Osaka Cement Co., | 1,3,10,13,14 |
| Y | Ltd.), | 2,4,6-9,11, |
| | 10 June, 2004 (10.06.04), | 12,15 |
| | (Family: none) | |
| X | JP 2000-47159 A (Sumitomo Osaka Cement Co., | 1,3,4,13,14 |
| Y | Ltd.), | 2,6-12,15 |
| | 18 February, 2000 (18.02.00), | |
| | (Family: none) | |

| ☒ | Further documents are listed in the continuation of Box C. | ☐ | See patent family annex. |
|---|---|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 August, 2007 (28.08.07) | 11 September, 2007 (11.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2007/061646

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-15096 A (Hitachi, Ltd.), | 1,3,7,8,15 |
| Y | 15 January, 2003 (15.01.03), | 4,6,9,10,14 |
| | & US 2003-7228 A1 | |
| | | |
| X | JP 2003-140099 A (Opnext Inc.), | 1,3,10,13-15 |
| Y | 14 May, 2003 (14.05.03), | 2,4,6-9,11, |
| | & US 2003-91258 A1 & EP 1308769 A2 | 12 |
| | & CN 1415990 A | |
| | | |
| X | JP 7-98442 A (NEC Corp.), | 1,3,6,13,14 |
| Y | 11 April, 1995 (11.04.95), | 2,4,7-12,15 |
| | & US 5572610 A1 & EP 629892 A3 | |
| | | |
| X | JP 10-260382 A (NEC Corp.), | 1,3,4,13,14 |
| Y | 29 September, 1998 (29.09.98), | 2,6-12,15 |
| | (Family: none) | |
| | | |
| P,X | WO 2006/107000 A1 (NGK Insulators, Ltd.), | 1,3,5,9,13, |
| | 12 October, 2006 (12.10.06), | 14 |
| | (Family: none) | |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005037547 A